# EUROPEAN PATENT APPLICATION

(11) **EP 4 722 876 A1**
(43) Date of publication of application: **08.04.2026**
(21) Application number: 24818658.7
(22) Date of filing: 04.06.2024
(51) Int. Cl.: G06F 3/0482

(54) **INTERFACE INTERACTION METHOD AND APPARATUS, AND DEVICE AND STORAGE MEDIUM**

(30) Priority: 05.06.2023 CN 202310659486
(71) Applicant: Beijing Zitiao Network Technology Co., Ltd., Beijing 100190 (CN)
(72) Inventor: YANG, Jiahui, Beijing 100028 (CN); HE, Zhimiao, Beijing 100028 (CN)
(74) Representative: Isarpatent
(86) International application number: PCT/CN2024/097373
(87) International publication number: WO 2024/251126

(57) **Abstract**

Embodiments of the disclosure relate to a method, an appratus, a device and a storage medium for interface interaction. The method provided herein comprises: presenting a session interface associated with a target object; in response to a selection of a session management entry in the session interface, presenting a set of session elements for indicating a set of sessions associated with the target object; and in response to a selection of a target session element of the set of session elements corresponding to a target session, presenting the target session in the session interface.

## Description

This application claims priority to Chinese Patent Application No. 2023106594869, filed 06. 05, 2023, entitled "METHOD, APPARATUS, DEVICE AND STORAGE MEDIUM FOR INTERFACE INTERACTION", the disclosure of which is incorporated herein by reference in its entirety.

### FIELD

Example embodiments of the present disclosure generally relate to the field of computers, and in particular, to a method, an apparatus, a device, and a computer-readable storage medium for interface interaction.

### BACKGROUND

With the development of computer technologies, the Internet has become an important platform for people's information interaction. For example, a user may use an instant messaging tool or other tools that provide an instant messaging service to chat with an object such as a friend, a stranger, a group, and the like.

In such an information interaction scenarios, people expect to manage the interaction with the an object in a more effective way, and to improve an efficiency for information acquisition or information sharing efficiency in a chat process.

### SUMMARY

In a first aspect of the present disclosure, an interface interaction method is provided. The method comprises presenting a session interface associated with a target object; presenting, in response to a selection of a session management entry in the session interface, a set of session elements for indicating a set of sessions associated with the target object; and presenting, in response to a selection of a target session element of the set of session elements corresponding to a target session, a set of messages associated with the target session in the session interface.

In a second aspect of the present disclosure, an apparatus for the interface interaction is provided. The apparatus comprises an interface presenting module configured to present a session interface associated with a target object; an element presenting module configured to present, in response to a selection of a session management entry in the session interface, a set of session elements for indicating a set of sessions associated with the target object; and a session presenting module configured to present, in response to a selection of a target session element of the set of session elements corresponding to a target session, a set of messages associated with the target session in the session interface.

In a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, and the computer program is executable by a processor to implement the method of the first aspect.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIGS. 2A-2F illustrate example interfaces according to some embodiments of the present disclosure;
FIGS. 3A-3D illustrate example interfaces according to further embodiments of the present disclosure;
FIGS. 4A and 4B illustrate example interfaces according to further embodiments of the present disclosure;
FIGS. 5A and 5B illustrate example interfaces according to further embodiments of the present disclosure;
FIGS. 6A and 6B illustrate example interfaces according to further embodiments of the present disclosure;

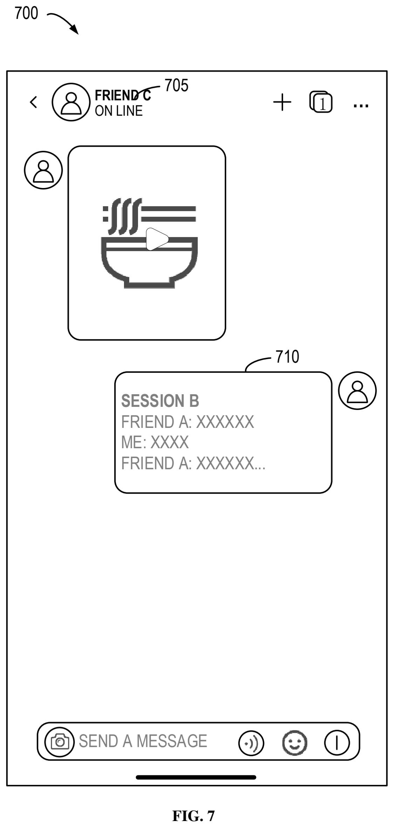

FIG. 7 illustrates example interfaces according to further embodiments of the present disclosure;
FIGS. 8A and 8B illustrate example interfaces according to further embodiments of the present disclosure;
FIG. 9 shows a flowchart of an example process of interface interaction according to some embodiments of the present disclosure;
FIG. 10 illustrates a schematic structural block diagram of an apparatus for interface interaction according to some embodiments of the present disclosure; and
FIG. 11 illustrates a block diagram of an electronic device capable of implementing multiple embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may relate to data of a user, acquisition and/or use of data, and the like. These aspects all follow the corresponding laws and regulations and related regulations. In embodiments of the present disclosure, all data is collected, obtained, processed, processed, forwarded, used, etc., all of which are performed on the premise that the user knows and confirms. Accordingly, when implementing embodiments of the present disclosure, the types, the usage range, the usage scenario, and the like of the data or information that may be involved should be notified to the user and the authorization of the user should be obtained in an appropriate manner according to the relevant laws and regulations. The specific notification and/or authorization manner may vary according to actual situations and application scenarios, and the scope of the present disclosure is not limited in this respect.

According to the solutions in the present specification and embodiments, if personal information processing is involved, processing may be performed on the premise of having a legality basis (for example, obtaining consent of a personal information subject, or necessary for performing a fulfillment contract), and processing only within a specified or agreed range. The user rejects personal information other than necessary information required by the basic function, and does not affect the basic function of the user.

As briefly mentioned above, in a chat scenario (e.g., a single-chat or group-chat with a contact(s)) with another object, people may involve different topics in different scenarios. Conventionally, people need to interact with such object in a unified session interface, which causes messages related to multiple subjects to be aggregated in one interface for presentation. In such cases, it may be difficult for the user to obtain chat records associated with a specific topic, which will affect an efficiency of message interaction between people.

Embodiments of the present disclosure provide a solution for interface interaction. According to this solution, a session interface associated with a target object may be presented. Further, in response to a selection of a session management entry in the session interface, a set of session elements is presented, where the set of session elements indicates a set of sessions associated with the target object. Further, in response to a selection of a target session element of the set of session elements corresponding to a target session, the target session is presented in the session interface. For example, the target object may comprise at least one user.

In this way, embodiments of the present disclosure can enable the user to efficiently switch between sessions, thereby improving an efficiency of message interaction and message acquisition between users.

Various example implementations of this solution are described in detail below in conjunction with the accompanying drawings.

### Example Environment

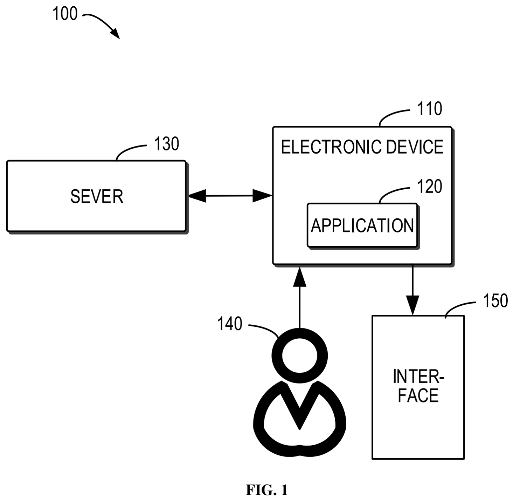

FIG. 1 illustrates a schematic diagram of an example environment 100 in which embodiments of the present disclosure can be implemented. As shown in FIG. 1, the example environment 100 may include an electronic device 110.

In this example environment 100, the electronic device 110 may run an application 120 that supports interface interaction. The application 120 may be any suitable type of application for the interface interaction, examples of which may include, but are not limited to, an instant messaging application, a video application, a social application, or other applications that provide a service for chatting with specific objects. The user 140 may interact with the application 120 via the electronic device 110 and/or its attachment device.

In the environment 100 of FIG. 1, if the application 120 is active, the electronic device 110 may present an interface 150 for supporting interface interaction via the application 120.

In some embodiments, the electronic device 110 communicates with the server 130 to enable provisioning of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (Personal Communication System ,PCS) device, a personal navigation device, a personal digital assistant (Personal Digital Assistant, PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the electronic device 110 can also support any type of interface for the user (such as a "wearable" circuit, etc. ).

The server 130 may be a standalone physical server, a server cluster composed of multiple physical servers, or a distributed system, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide background services for the application 120 that supports virtual scenes in the electronic device 110.

A communication connection may be established between the server 130 and the electronic device 110. The communication connection may be established in a wired manner or a wireless manner. The communication connection may include, but is not limited to, a Bluetooth connection, a mobile network connection, a Universal Serial Bus (Universal Serial Bus, USB) connection, a Wireless Fidelity (WiFi) connection, and the like, and embodiments of the present disclosure are not limited in this aspect. In an embodiment of the present disclosure, the server 130 and the electronic device 110 may implement signaling interaction through a communication connection between the two.

It should be understood that the structures and functions of the various elements in the environment 100 are described for example purposes only and do not imply any limitation to the scope of the present disclosure.

Some example embodiments of the present disclosure will be described below with continued reference to the accompanying drawings.

### Example Interface Interaction

An example session interface according to an embodiment of the present disclosure will be described below with reference to the accompanying drawings.

### Example One

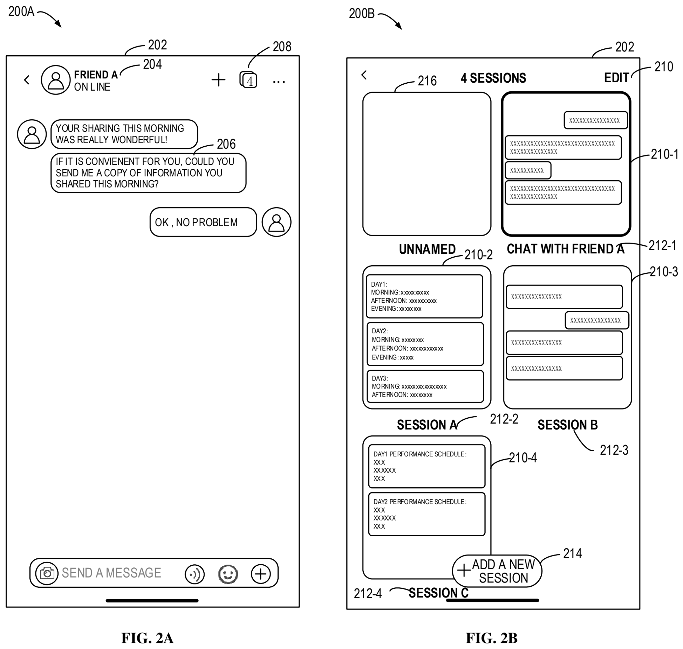

An example interface interaction process according to some embodiments of the present disclosure will be described below with reference to FIGS. 2A-2F. FIGS. 2A-2F illustrate example interfaces according to some embodiments of the present disclosure, which may be provided by the electronic device 110 shown in FIG. 1. Specifically, the electronic device 110 may, for example, utilize the installed application 120 to present such an example interface.

As shown in FIG. 2A, the electronic device 110 may provide an interface 202 for the user. Such an interface 202 may be, for example, a session interface with an object 204 (e.g., friend A). It should be understood that such an interface 202 may be provided by an appropriate application 120, such as an instant messaging application, a social application, a media application, or the like. As shown in FIG. 2A, the interface 202 may be used to present a message 206 between the user and the object 204.

In some embodiments, the electronic device 110 may also provide a session management entry 208 in the interface 202 for viewing or managing a set of sessions with the object 204. Taking FIG. 2A as an example, the session management entry 208 may also indicate, for example, a number (e.g., 4) of the set of sessions with the object 204.

Further, after receiving the selection operation for the session management entry 208, the electronic device 110 may present the interface as shown in FIG. 2B. As shown in FIG. 2B, the electronic device 110 may present a set of session elements corresponding to the set of sessions between the objects 204.

Taking FIG. 2B as an example, there are 4 sessions between the current user and the object 204 (i.e., friend A), for example, "chat with friend A", "session A", "session B" and "session C".

Correspondingly, the electronic device 110 may present a session identifier of the set of sessions as the respective session element. For example, the electronic device 110 may present a session identifier 212-1, a session identifier 212-2, a session identifier 212-3, and a session identifier 212-4 corresponding to the four sessions.

Additionally or alternatively, the electronic device 110 may also present a message preview of the set of sessions as the respective session element. Such a message preview may be used, for example, to present at least one message associated with a respective session. Taking FIG. 2B as an example, the electronic device 110 may present a message preview 210-1, a message preview 210-2, a message preview 210-3, and a message preview 210-4 corresponding to the set of sessions.

Therefore, embodiments of the invention can enable the user to quickly know a current existing session(s), so that the user can conveniently perform the operations such as viewing, management or switching of the session.

In some embodiments, the electronic device 110 may further distinguish the sessions currently displayed in the interface 202 through different styles. Taking FIG. 2B as an example, the session currently displayed in the interface 202 may be, for example, "session with the friend A". Further, as shown in FIG. 2B, the electronic device 110 may, for example, differently present the style of the session element (e.g., the message preview 210-1) of the current session and the styles of the session elements (e.g., the message previews 210-2 to 210-4) of other sessions displayed in the interface 202.

It should be understood that such session elements may be distinguished by appropriate styles, examples of which may include, but are not limited to, different colors, fonts, brightness, transparency, and the like.

In some embodiments, the electronic device 110 may also provide a creation entry for creating a new session associated with the object 204. As shown in FIG. 2B, the electronic device 110 may provide a creation entry 214 and/or a creation entry 216. The creation process of the new session will be described in detail below and thus will not be described in detail now.

Additionally, the electronic device 110 may also provide a session operation option for operating the set of sessions. For example, the electronic device 110 may provide one or more operation options for the set of sessions after receiving a selection for an editing entry 210.

For example, upon receiving the selection for the editing entry 210, the electronic device 110 may provide an editing option for the session. For example, such an editing option may be used to edit a session identifier of a specific session. For example, the user may modify the session identifier of the session after triggering the editing option.

As another example, the electronic device 110 may also provide a deletion option for the session, for example, for deleting a selected specific session. In some embodiments, upon receiving the selection for the deletion option, the electronic device 110 may delete all of the messages associated with the deleted session. For example, if the user chooses to delete "Session A", the electronic device 110 may , for example, delete all message records in "Session A".

As another example, the electronic device 110 may also, for example, maintain a global session with the object 204, which may be associated with a full set of a message set associated with the object, regardless of whether it is associated with another session. For example, taking FIG. 2B as an example, the session "chat with friend A" may correspond to the global session with object 204.

Further, such a global session 204 is, for example, non-editable. For example, the session identifier may not be deleted or the session identifier may not be edited. Accordingly, in response to the user choosing to delete another session (e.g., session A), the electronic device 110 may delete the session element associated with session A and disassociate an association between the set of messages associated with "session A" in the global session 204 and "session A", without deleting the set of messages from the message records of the global session 204. This may, for example, cause the related session element of "session A" to be no longer present in the interface shown in FIG. 2B, but still retain the message associated with "session A" in the global session.

For example, other non-global sessions (e.g., session A, session B, and session C) may be topic sessions, which may be associated with a subset of the message set with the object. For example, the session A may be associated with a part of messages in the full message set. As another example, a new session may not be associated with any historical messages, for example. As yet another example, the user, for example, also creates a session and sets the session to be associated with all historical messages, in this case the topic session may correspond to, for example, all historical messages. However, upon receiving a new message that is not associated with the topic session, the new message will always be associated with the global session without being associated with the topic session.

As still another example, the electronic device 110 may also provide a sharing option for sharing the session, for example. The process of sharing the session will be described in detail below, and thus is not described in detail now.

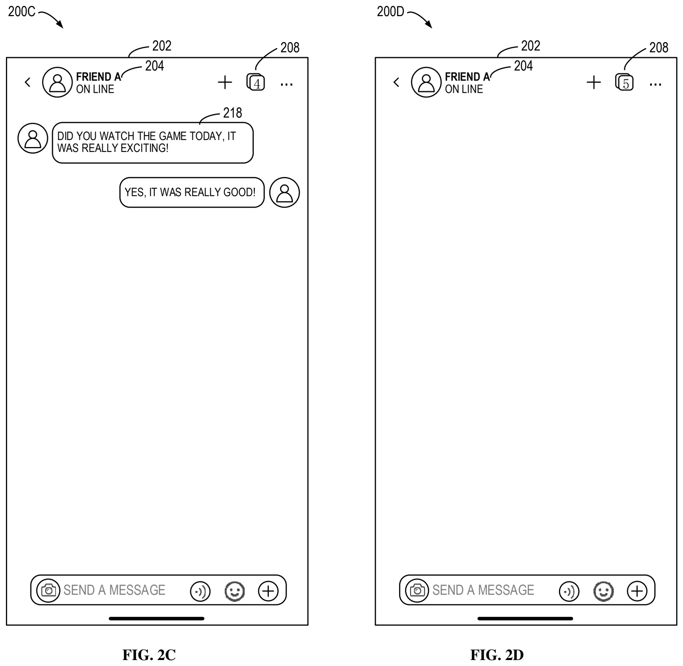

For example, the user may enter "session B", for example, by clicking a session element (e.g., the message preview 210-3 or the session identifier 212-3) of "Session B" in FIG. 2B. Accordingly, as shown in FIG. 2C, the electronic device 110 may, for example, switch the interface 202 to presenting "session B" with the object 204.

As shown in FIG. 2C, when "session B" has been associated with a message 218, the electronic device 110 may present the message 218 in "session B" in the interface 202 to provide viewing of the historical message, so as to facilitate understanding of the dialog process in the session.

In this way, the electronic device 110 may enable the user to view message or perform new message interaction with the object 204 in the switched session, thereby improving user's efficiency of message interaction and message acquisition.

In some embodiments, the electronic device 110 may also move the message 218 to another session in the set of sessions according to a movement operation triggered by a user for the message 218 associated with "session B".

For example, the user may long press the message 218 in "session B" to trigger the presentation of a movement option. Further, after the user triggers the movement option and designates another session to be moved to, the electronic device 110 may delete the message 218 from the "session B" and associate the message 218 to the designated another session. It may be understood that, when deleting the message in the global session, if the message still exists in the topic session, the message in both the global session and the topic session will be deleted.

In some further embodiments, in response to the user selecting the creation entry 214 and/or the creation entry 216 as illustrated in FIG. 2B, the electronic device 110 may create a new session with the target object.

Additionally, the electronic device 110 may also associate a set of messages associated with the object 204 to the created new session. For example, in the session creation process, the user may, for example, select one or more messages from the historical messages to associate with the new session to be created.

In this example, the user may, for example, first select a set of messages for creating the new session. Further, in response to a trigger operation of the user being received, the electronic device 110 may generate a session identifier based on the set of messages selected by the user. For example, the electronic device 110 may use the initial message in the messages selected by the user as the session identifier, and provide the function of editing the session identifier to the user.

As another example, the electronic device 110 may obtain a session identifier input by a user, and in response to a trigger operation of the user being received, determine one or more messages matching the session identifier from the historical message set associated with the object 204, to associate the one or more messages to the new session to be created.

In some embodiments, the electronic device 110 may also create a blank session. In this case, the session will not be associated with any existing message. For example, as shown in FIG. 2D, the electronic device 110 may display the created new session (for example, a blank new session) in the interface 202.

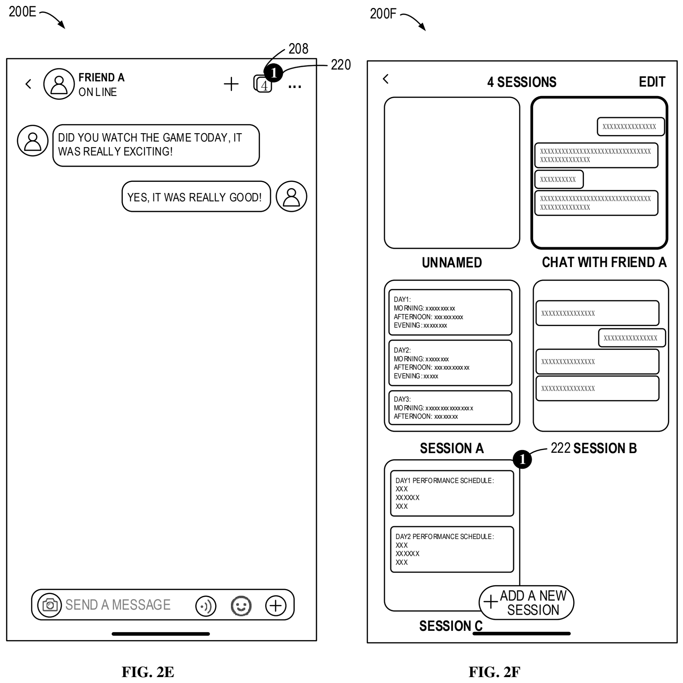

In some embodiments, the electronic device 110 may also utilize the session management entry to provide a reminder regarding a new message in the session. For example, taking FIG. 2E as an example, the electronic device 110 may display "session B" in the interface 202. Furthermore, the electronic device 110 may receive a new message associated with "session C".

Accordingly, the electronic device 110 may present a message indicator 220 in association with the session management entry 208, to indicate that a new message was received in another session. Further, after receiving the selection of the session management entry 208, as shown in FIG. 2F, the electronic device 110 may further, in association with the session element associated with "session C", present the message indicator 222 for indicating that "session C" has received a new message.

In some embodiments, the message indicator 220 may also be used to indicate the number of unread messages in all other sessions that are not shown. The message indicator 222 may be used to indicate the number of unread messages in a particular session that is not shown.

In some embodiments, after the user enters "session C", for example, the message indicator 222 may stop being presented.

Based on the process discussed above, embodiments of the present disclosure may enable the user to switch between different sessions with the same object in the session interface, thereby the efficiency of message interaction between the user and the object can be improved.

### Example Two

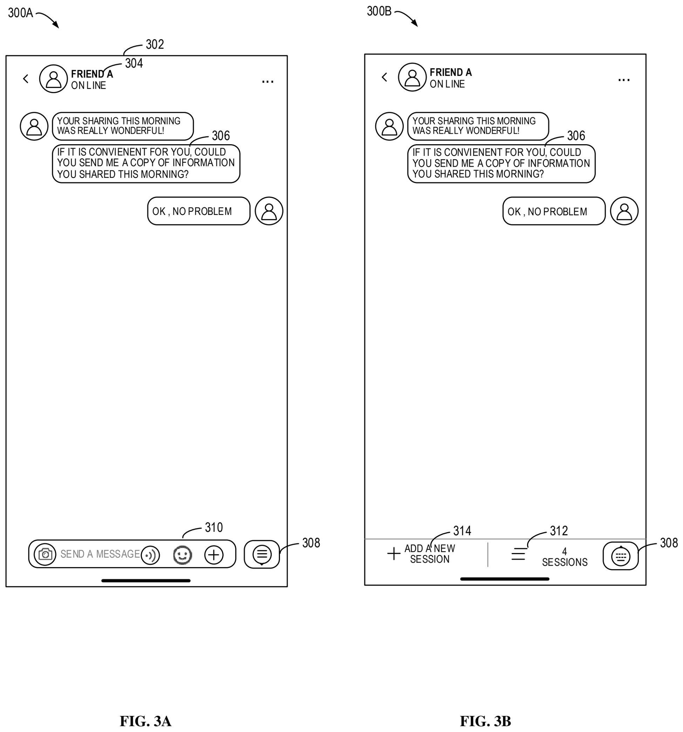

An example interface interaction process according to some embodiments of the present disclosure will be described below with reference to FIGS. 3A-3D. FIGS. 3A-3D illustrate example interfaces according to some embodiments of the present disclosure, which may be provided by the electronic device 110 shown in FIG. 1, for example. Specifically, the electronic device 110 may, for example, utilize the installed application 120 to present such example interfaces.

As shown in FIG. 3A, the electronic device 110 may provide an interface 302 for the user. Such an interface 302 may be, for example, a session interface with an object 304 (e.g., friend A). It should be understood that such an interface 302 may be provided by an appropriate application 130, such as an instant messaging application, a social application, a media application, or the like. As shown in FIG. 3A, the interface 302 may be used to present a message 306 between the user and the object 304.

In some embodiments, the interface 302 may also include a switching entry 308. After receiving a predetermined operation on the switching entry 308, the electronic device 110 may switch an area corresponding to an input component 310 in the interface 300A to present a session management entry. Such an input component 310 may be configured to, for example, receive a message input to the session interface by a current user.

As shown in FIG. 3B, the electronic device 110 may present, in the area, a session management entry 312 and a creation entry 314 for creating a new session with the object 304.

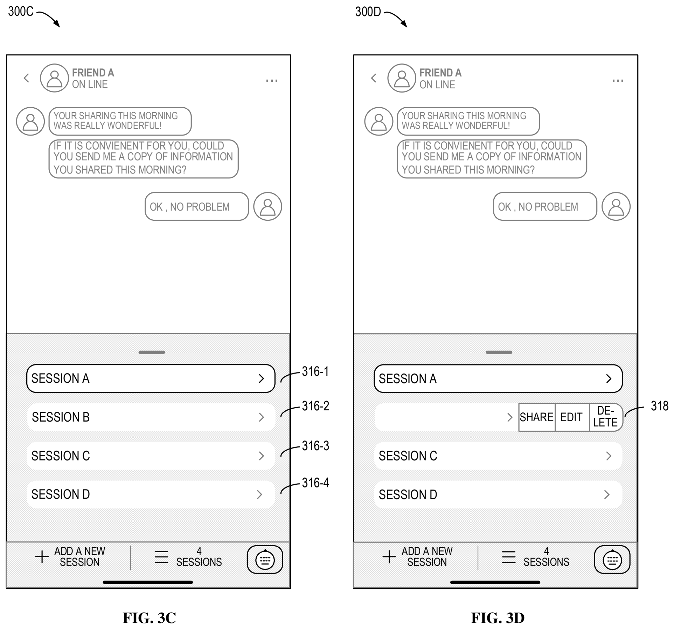

In some embodiments, the session management entry 312 may also indicate, for example, the number (e.g., 4) of sessions with the object 304. Further, after receiving the selection operation for the session management entry 312, the electronic device 110 may present an interface as shown in FIG. 3C. As shown in FIG. 3C, the electronic device 110 may present a set of session elements corresponding to a set of sessions with the object 304.

Such a set of sessions may include a plurality of sessions, session participants of the plurality of sessions include the current user and the object 304. Taking FIG. 3C as an example, the set of sessions associated with the current user and the object 304 may include 4 sessions, e.g., "session A", "session B", "session C", and "session D". By way of example, such a set of sessions may include, for example, one or more single-chat sessions between the current user and the object 304 (e.g., the topic session as discussed above). Alternatively or additionally, such a set of sessions may also include, for example, one or more group-chat sessions, group-session members of which contain the current user and the object 304.

Accordingly, the electronic device 110 may present session identifiers of the set of sessions as the respective session elements. For example, the electronic device 110 may present a session identifier 316-1, a session identifier 316-2, a session identifier 316-3, a session identifier 316-4 corresponding to the four sessions.

In some embodiments, the electronic device 110 may also distinguish the sessions currently displayed in the interface 302 through different styles. Taking FIG. 3B as an example, the session currently displayed in the interface 302 may be, for example, "session A". Further, as shown in FIG. 3B, the electronic device 110 may, for example, differently present the style of the session element (e.g., session identifier 316-1) of the current session and the styles of the session elements (e.g., session identifiers 316-2 to 316-4) of other sessions displayed in the interface 302.

It should be understood that such session elements may be distinguished by appropriate styles, examples of which may include, but are not limited to, different colors, fonts, brightness, transparency, and the like.

Additionally, the electronic device 110 may also provide a session operation option for operating the set of sessions. By way of example, the electronic device 110 may provide the session operation option 318 for "session B" after receiving the long-press operation for the session identifier 316-2. For example, such a session operation option 318 may include the editing option for editing the session identifier of the specific session. For example, the user may modify the session identifier of the session after triggering the editing option.

As another example, the session operation option 318 may include a deletion option to delete the selected "session B". As yet another example, the session operation option 318 may include a deleting option for sharing "session B". The process of sharing the session will be described in detail below, and thus is not described in detail now.

For example, the user may enter a corresponding further session, for example, by clicking the session identifier 316-2 to the session identifier 316-4. Regarding a process of switching to another session, one may refer to the session switching process as described with reference to FIG. 2A to FIG. 2F, and details are not described here again. In addition, regarding an interaction logic for the creation entry 314, one may refer to the creation process of the new session as described in FIG. 2A to FIG. 2F, and details are not described here again.

### Example Three

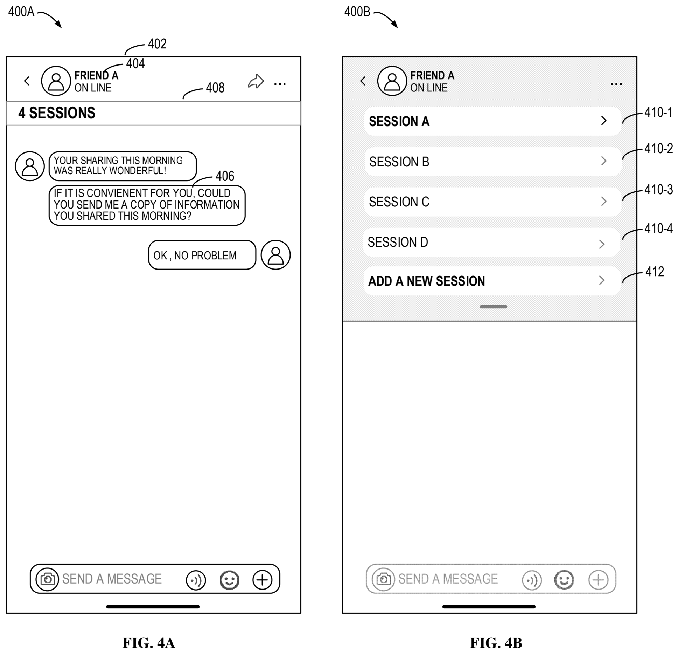

An example interface interaction process according to some embodiments of the present disclosure will be described below with reference to FIGS. 4A-4B. FIGS. 4A-4B illustrate example interfaces according to some embodiments of the present disclosure, which may be provided by the electronic device 110 shown in FIG. 1, for example. Specifically, the electronic device 110 may, for example, utilize the installed application 120 to present such example interfaces.

As shown in FIG. 4A, the electronic device 110 may provide an interface 402 for the user. Such an interface 402 may be, for example, a session interface with object 404 (e.g., friend A). It should be understood that such an interface 402 may be provided by an appropriate application 140, such as an instant messaging application, a social application, a media application, or the like. As shown in FIG. 4A, the interface 402 may be used to present a message 406 between the user and the object 404.

In some embodiments, the interface 402 may include a session management entry 408. In some embodiments, the session management entry 408 may also indicate, for example, the number (e.g., 4) of sessions with the object 404. For example, the session management entry 408 may, for example, be presented in a message area associated with the interface 402, e.g., presented at the top of the message area.

Further, after receiving a selection operation for the session management entry 408, the electronic device 110 may present an interface as shown in FIG. 4B. As shown in FIG. 4B, the electronic device 110 may present, through a drop-down list style, a set of session elements corresponding to a set of sessions with the object 404.

Taking FIG. 4B as an example, there are 4 sessions between the current user and the object 404, for example, "session A", "session B", "session C", and "session D". Correspondingly, the electronic device 110 may present session identifiers of the set of sessions as the respective session elements. For example, the electronic device 110 may present a session identifier 410-1, a session identifier 410-2, a session identifier 410-3, and a session identifier 410-4 corresponding to the four sessions.

In some embodiments, the electronic device 110 may also distinguish the sessions currently displayed in the interface 402 through different styles. Taking FIG. 4B as an example, the session currently displayed in the interface 402 may be, for example, "session A". Further, as shown in FIG. 4B, the electronic device 110 may, for example, differently present the style of the session element (e.g., session identifier 410-1) of the current session and the styles of the session elements (e.g., session identifiers 410-2 to 410-4) of other sessions displayed in the interface 402.

It should be understood that such session elements may be distinguished by appropriate styles, examples of which may include, but are not limited to, different colors, fonts, brightness, transparency, and the like.

Additionally, the electronic device 110 may also provide a session operation option for operating for the set of sessions. By way of example, the electronic device 110 may provide the session operation option for "session B" after receiving the long-press operation for the session identifier 410-2. Regarding triggering, displaying and interaction processes of the session operation option, one may refer to the content described above, and details are not described here again.

For example, the user may enter a corresponding further session, for example, by clicking the session identifier 410-2 to the session identifier 410-4. For a process of switching to another session, one may refer to a session switching process described above, and details are not described here again.

In addition, the electronic device 110 may also provide a creation entry 412 for creating a new session with the object 404. For operations of creating the entry 412, one may refer to the creation process of the new session described above, and details are not described here again.

### Example Message Interface

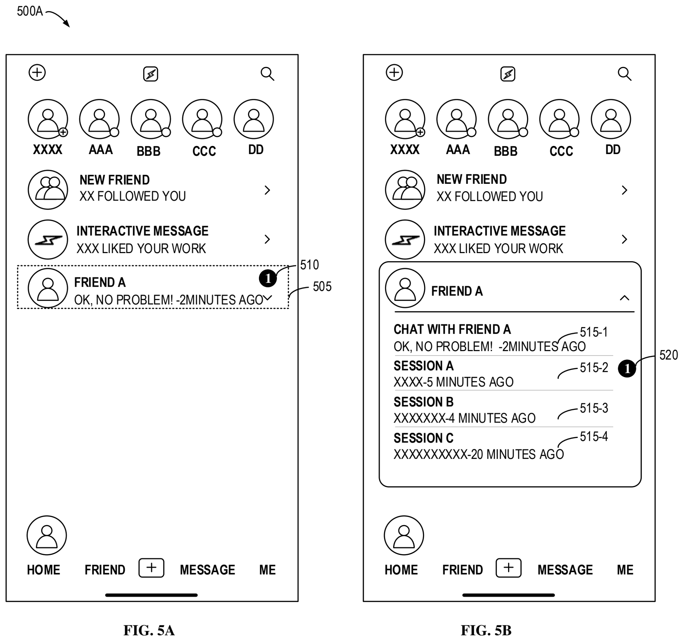

In some embodiments, the electronic device 110 may also provide a message interface 500A as shown in FIG. 5A for the user. Such a message interface 500A may, for example, present a set of object message items 505 associated with a set of objects. Such a set of objects may include any suitable object that has a message interaction with the current user, such as a friend object, a stranger object, a group chat object, a virtual object, or the like.

As shown in FIG. 5A, the object message item 505 may correspond to, for example, the object "friend A". In some embodiments, upon receiving a new message associated with the object "friend A", the electronic device 110 may also present, in association with the object message item 505, a message indicator 510 for indicating a new message.

In some embodiments, the electronic device 110 may also expand the object message item 505 based on a user operation. As shown in FIG. 5B, after receiving a predetermined operation (for example, clicking the expansion control) on the object message item 505, the electronic device 110 may present a set of session message items corresponding to the set of sessions with "friend A".

Taking FIG. 5B as an example, the user and "friend A" may have 4 sessions. Accordingly, the electronic device 110 may present 4 session message items corresponding to the 4 sessions, i.e., a session message item 515-1, a session message item 515-2, a session message item 515-3, and a session message item 515-4 (individually or collectively referred to as a session message item). Such a session message item 515 may, for example, display at least part of the latest message in the corresponding session.

Further, the electronic device 110 may also receive a selection of the session message item 515, and then switch to present the corresponding session interface to display a session corresponding to the selected session message item 515.

In some embodiments, as shown in FIG. 5B, in response to a new message existing in a specific session (e.g., "session A"), the electronic device 110 may also present a message indicator 520 for indicating the new message, in association with the session message item 515-2.

In some embodiments, the message indicator 510 may also be configured to indicate the number of unread messages in all other sessions that are not displayed. The message indicator 520 may be configured to indicate the number of unread messages in a specific session that is not displayed.

In some embodiments, after the user enters "session A", for example, the message indicator 520 may stop being presented.

In this way, the embodiments of the present disclosure can enable a user to more conveniently check a session with a specific object in the message page, thereby improving message interaction efficiency and message acquisition efficiency.

### Example Switching

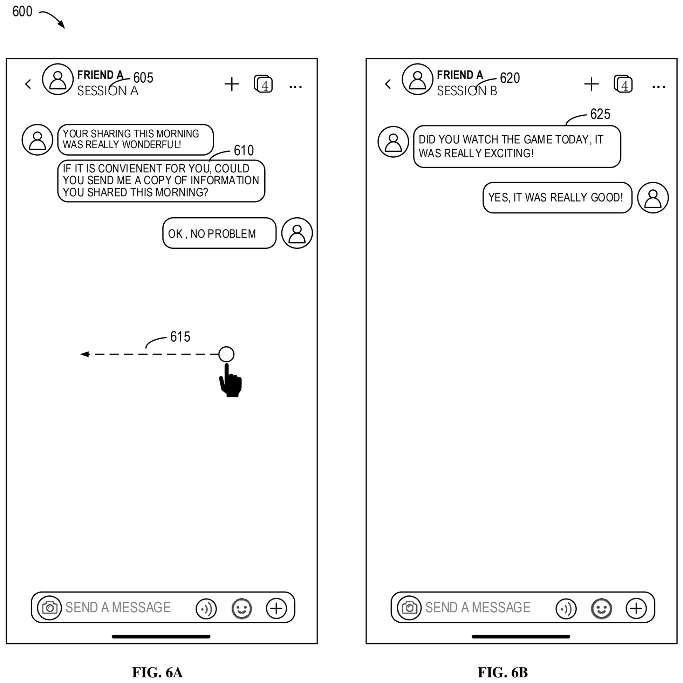

In some embodiments, the electronic device 110 may also provide a session interface 600 as shown in FIG. 6A for the user. In some embodiments, the session interface 600 may, for example, present a session identifier 605 for a currently displayed session (e.g., session A).

It should be understood that the session interface discussed above with reference to FIG. 2 may also present, for example, the session identifier of the session currently displayed in the interface.

In some embodiments, the electronic device 110 may also receive a trigger operation in the interface 600 that indicates a target direction, and the interface 600 may switch to display another session in the set of sessions with the object.

For example, as shown in FIG. 6A, the electronic device 110 may receive a sliding operation 615 corresponding to the target direction in a predetermined area of the session interface. Such a predetermined area may include, for example, a message area of the session interface 600.

Further, as shown in FIG. 6B, the electronic device 110, for example, switches the interface 600 to display another session, for example, a session B. Accordingly, the electronic device 110 may also, for example, present the session identifier 620 of the currently switched session (e.g., session B) in the interface 600.

In some embodiments, the session that is switched to corresponds to the direction indicated by sliding operation 615 and is determined from a set of sessions associated with the object. For example, the set of sessions may be, for example, arranged as "session A", "session B", "session C", and "session D" as needed. Correspondingly, when the interface 600 currently displays "session A", the user may, for example, switch to "session B" through a left sliding operation.

As another example, when the interface 600 currently displays "session B", the user may switch to "session C", for example, by a left sliding operation, and may switch back to "session A" through an optimization operation.

In this way, embodiments of the present disclosure can further improve efficiency of switching between different sessions by a user.

### Example Session Sharing

In some embodiments, as discussed above, the electronic device 110 may also provide the user with a sharing option to share a specific session, e.g., a "sharing" control as shown in FIG. 3D.

Further, after receiving the selection for the sharing option, the electronic device 110 may determine a sharing object to be shared to (for example, friend C). Further, as shown in FIG. 6, the electronic device 110 may share the set of messages associated with the selected session (e.g., session B) into the session interface 700 associated with the sharing object 705.

In some embodiments, the set of messages may be presented as an aggregation message 710 in interface 700, for example. The aggregation message 710 may, for example, display the session identifier of the shared session and at least part of the set of messages associated with the session.

Accordingly, the current user and/or the sharing object 705 (e.g., friend C) may view all messages in the session (e.g., session B) by clicking the aggregation message 710.

In this way, embodiments of the present disclosure can facilitate the user to achieve the session-based sharing of the messages and improve the efficiency of message sharing.

### Example Content Sharing

In some embodiments, the electronic device 110 may also enable the user to share a specific content into a specific session with the object. A sharing of a media content is taken as an example to describe a process of sharing content to a session below.

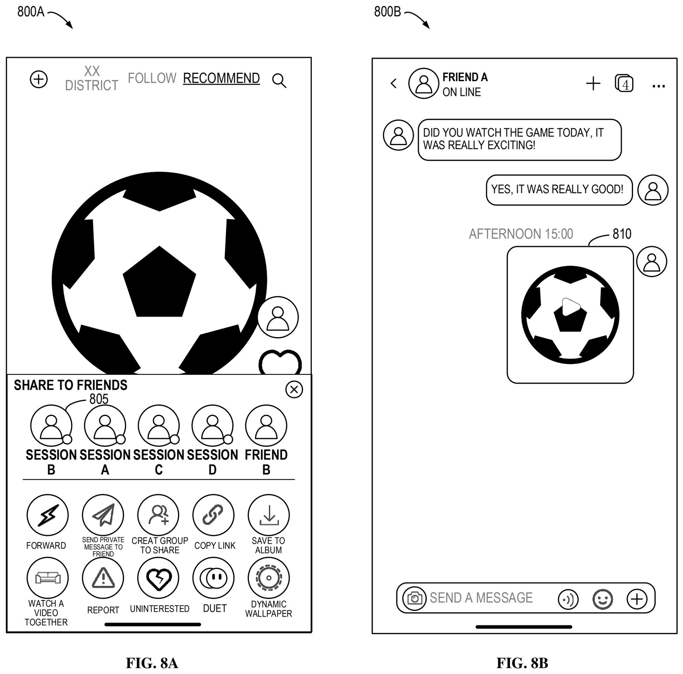

As shown in FIG. 8A, the electronic device 110 may provide an interface 800A as shown in FIG. 8A. The interface 800A may correspond to, for example, a sharing page of the media content. In the interface 800A, the electronic device 110 may provide one or more sharing entries for sharing to the session associated with object "friend A".

As shown in FIG. 8A, the electronic device 110 may present a set of sharing options 805 corresponding to a set of sessions associated with "friend A". Further, the electronic device 110 may send the media content to the session corresponding to the selected sharing option according to a selection of a specific sharing option among the set of sharing options by the user. For example, as shown in FIG. 8B, if the user chooses to share the media content into "Session B", the electronic device 110 may display the shared media content 810 in the session interface 800B corresponding to "Session B".

In some embodiments, during the content sharing process, the electronic device 110 may further receive a session recommendation operation triggered by the user, so as to present to the user one or more sessions matching the media content to be shared. For example, taking FIG. 8B as an example, the electronic device 110 may determine that the media content relates to the theme "football" based on the content description information (for example, the title) of the media content, and further provide the user with a sharing option for sharing to the "session B" corresponding to the "football". Taking FIG. 8A as an example, the sharing option 805 corresponding to the "session B" recommended based on the media content may be preferentially presented in the interface 800A, for example.

In addition, it should be understood that although the description of the sharing process is performed by using the media content as an example of the target content to be shared, embodiments of the present disclosure may also be applicable to sharing of other suitable forms of content, examples of which may include, but are not limited to: text content, picture content, video content, audio content, link content, card content, and the like.

In this way, embodiments of the present disclosure can further improve the efficiency of sharing the content to the session, thereby helping the user to efficiently share the content into the desired session.

### Collaboration and Management of Sessions

Processes of embodiments according to the present disclosure are described above by using a "single-chat scenario" as an example. In some embodiments, such a session interface may include a single-chat session interface or a group-chat session interface with an object (e.g., a friend, a stranger, or a virtual object).

In some embodiments, the operations of creating the new session, editing the existing session, and/or deleting the existing session as discussed above may be performed, for example, based on a confirmation from at least one user corresponding to the target object.

For example, continuing to use the single-chat scenario as an example, when the current user requests to create the new session, edit the identifier of the existing session, and/or delete the existing session, the object (for example, a friend A) corresponding to the session may receive a reminder regarding the request. in response to the user confirming the request, the corresponding creation operation, editing operation, and/or deletion operation are able to be performed successfully.

As another example, in the group-chat scenario, the creation, editing, and/or deletion of the session in a group may be performed, for example, based on a group management user's confirmation.

As another example, operations to create a new session, edit an existing session, and/or delete an existing session as discussed above, for example, may be performed directly without requiring a confirmation of at least one user corresponding to the target object.

In some embodiments, in response to the creation operation, the editing operation, and/or the deletion operation being successfully performed, at least one user associated with the session may, for example, also receive a reminder regarding the creation operation, the editing operation, and/or the deletion operation.

Alternatively or additionally, the execution result of the creation operation, the editing operation, and/or the deletion operation may also be synchronized to a user associated with the session, such as the user corresponding to the single-chat, or all users in the group.

In this way, the embodiments of the present disclosure can further facilitate the collaborative management of the session and improve the experience of the user's session interaction.

### Example Processes

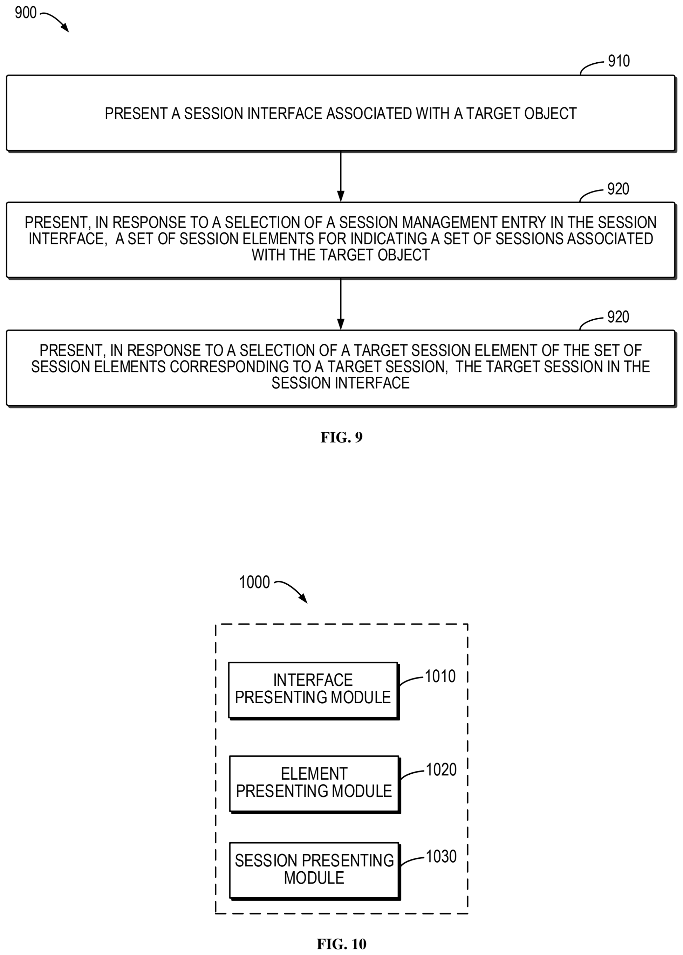

FIG. 9 illustrates a flowchart of an example process 900 for interface interaction according to some embodiments of the present disclosure. The process 900 may be implemented at electronic device 110. The process 900 is described below with reference to FIG. 1.

As shown in FIG. 9, at block 910, the electronic device 110 presents a session interface associated with the target object.

At block 920, in response to a selection of a session management entry in the session interface, the electronic device 110 presents a set of session elements for indicating a set of sessions associated with the target object.

At block 930, in response to a selection of a target session element of the set of session elements corresponding to a target session, the electronic device 110 presents the target session in the session interface.

In some embodiments, the session management entry indicates the number of the set of sessions.

In some embodiments, the chat interface session interface comprises an input switching component entry, the session interface comprises a switching entry, and the process 900 further comprises: switching, in response to a predetermined operation on the switching entry in the session interface, an area corresponding to an input component in the session interface and to present the session management entry, the input component being configured to receive a message input to the session interface by a current user.

In some embodiments, the set of session elements is configured to indicate session description information of the set of sessions, where the session description information comprises at least one of: a session identifier of a session; or a message preview of a session, where the message preview presents at least one message associated with the session.

In some embodiments, presenting the set of session elements comprises: presenting a first session element corresponding to a first session in the set of sessions in a first style, where the first session is a current session displayed in the session interface; and presenting a second session element corresponding to a second session in the set of sessions in a second style, the first style being different from the second style.

In some embodiments, the process 900 further comprises: providing, in response to a predetermined operation on a respective session element in the set of session elements, at least one session operation option for operating the session to be operated corresponding to the respective session element.

In some embodiments, the at least one session operation option comprises at least one of: an editing option, configured to edit a session identifier of the session to be operated; a deletion option, configured to delete the session to be operated; a sharing option, configured to share the session to be operated.

In some embodiments, the process 900 further comprises, performing, in response to receiving the selection for the deletion option, at least one of: deleting a first set of messages associated with the first session; disassociating an association between the first set of messages and the first session to be operated, without deleting the first set of messages.

In some embodiments, the session interface is a first session interface, and the process 900 further comprises: determining a sharing object to be shared in response to receiving a selection of the sharing option; and sharing the first set of messages associated with the first session into a second session interface associated with the sharing object.

In some embodiments, the first set of messages is presented as an aggregation message in the second session interface.

In some embodiments, the process 900 further comprises: providing a creation entry for creating a new session associated with the target object in the session interface; and creating a third session associated with the target object based on a predetermined operation on the creation entry.

In some embodiments, process 900 further comprises associating a set of target messages associated with the target object to the third session.

In some embodiments, the set of target messages comprises at least one of: a second set of messages selected by the user; and a third set of messages from a set of historical messages associated with the target object determined based on a predetermined operation on the third session by the user.

In some embodiments, the process 900 further comprises: determining a session identifier of the third session, where the session identifier of the third session comprises at least one of: a session identifier input by the user; or a session identifier determined based on a set of messages associated with the third session, where the set of messages is determined based on a user input.

In some embodiments, the process 900 further comprises: receiving a trigger operation indicating a target direction in the session interface; and switching the session interface to present a fourth session of the set of sessions, where the fourth session is determined based on the target direction.

In some embodiments, the trigger operation comprises: a sliding operation corresponding to the target direction in a predetermined area of the session interface.

In some embodiments, the process 900 further comprises: presenting, in the session interface, the session identifier of the target session currently displayed in the session interface.

In some embodiments, process 900 further comprises, presenting, in response to receiving a new message associated with a fifth session of the set of sessions, a first message indicator in association with the session management entry, where the fifth session is different from the target session.

In some embodiments, the process 900 further comprises, presenting, in response to a selection of the session management entry in the session interface, a second message indicator for indicating the new message, in association with a third session element corresponding to the fifth session.

In some embodiments, the first message indicator indicates a number of all unread messages associated with the set of sessions, and/or the second message indicator indicates a number of unread messages associated with the fifth session.

In some embodiments, the process 900 further comprises presenting a message interface associated with the current user, the message interface presenting a set of object message items associated with a set of objects, the set of object message items comprising a target object message item corresponding to the target object; and presenting, in response to a predetermined operation on the target object message item, a set of session message items corresponding to the set of sessions of the target object in the message interface.

In some embodiments, process 900 further comprises, presenting, in response to receiving a new message associated with the target session, a third message indicator for indicating the new message, in association with a target session message item corresponding to the target session.

In some embodiments, the process 900 further comprises: receiving a request to create a new session or a request to delete an existing session; and performing the creation of the new session or the deletion of the existing session based on the confirmation of the request by at least one user corresponding to the target object.

In some embodiments, the process 900 further comprises: sending, in response to a new session associated with the target object being created or an existing session being deleted, a reminder regarding a creation of the new session or a deletion of the existing session to at least one user corresponding to the target object.

In some embodiments, the process 900 further comprises: receiving a sharing request for sharing target content to the target object; and sending the target content to a sixth session in the set of sessions.

In some embodiments, sending the target content to the sixth session in the set of sessions comprises: presenting a set of sharing options corresponding to the set of sessions based on the sharing request; and sending, in response to a selection of a target sharing option corresponding to the sixth session in the set of sharing options, the target content to the sixth session in the set of sessions.

In some embodiments, the process 900 further comprises: displaying, in response to a session recommendation operation triggered by the user, a sharing option corresponding to the sixth session, where the sixth session is determined from the set of sessions based on the content description information of the target content.

In some embodiments, where the set of sessions comprises at least one of: a global session associated with a full set of a message set associated with the target object; or a topic session associated with a subset of the message set with the target object.

In some embodiments, the set of sessions comprises a plurality of sessions, where sesson participants of the plurality of sessions comprise the current user and the target object.

In some embodiments, the process 900 further comprises: moving, in response to a movement operation triggered by the user on a target message associated with the target session, the target message to another session of the set of sessions different from the target session.

### Example Apparatus and Device

Embodiments of the present disclosure also provide a corresponding apparatus for implementing the above-mentioned method or process. FIG. 10 shows a schematic structural block diagram of an apparatus 1000 for interface interaction according to some embodiments of the present disclosure. The apparatus 1000 may be implemented as or included in the electronic device 110. The various modules/components in the apparatus 1000 may be implemented by hardware, software, firmware, or any combination thereof.

As shown in FIG. 10, the apparatus 1000 comprises an interface presenting module 1010 configured to present a session interface associated with a target object; an element presenting module1020 configured to present, in response to a selection of a session management entry in the session interface, a set of session elements for indicating a set of sessions associated with the target object ; and a session presenting module 1030 configured to present, in response to a selection of a target session element of the set of session elements corresponding to a target session, the target session in the session interface.

In some embodiments, the session management entry indicates a number of the set of sessions.

In some embodiments, in some embodiments, the chat interface session interface comprises an input switching component entry, the session interface comprises a switching entry, and the interface presenting module 1010 is further configured to: switching, in response to a predetermined operation on the switching entry in the session interface, an area corresponding to an input component in the session interface and to present the session management entry, the input component being configured to receive a message input to the session interface by a current user.

In some embodiments, the set of session elements is configured to indicate session description information of the set of sessions, where the session description information comprises at least one of: a session identifier of a session; or a message preview of a session, where the message preview presents at least one message associated with the session.

In some embodiments, the element presenting module 1020 is further configured to: present a first session element corresponding to a first session in the set of sessions in a first style, where the first session is a current session displayed in the session interface; and present a second session element corresponding to a second session in the set of sessions in a second style, the first style being different from the second style.

In some embodiments, the element presenting module 1020 is further configured to, provide, in response to a predetermined operation on a respective session element in the set of session elements, at least one session operation option for operating the session to be operated corresponding to the respective session element.

In some embodiments, the at least one session operation option comprises at least one of: an editing option, configured to edit a session identifier of the session to be operated; a deletion option, configured to delete the session to be operated; a sharing option, configured to share the session to be operated.

In some embodiments, the element presenting module 1020 is further configured to, perform, in response to receiving the selection for the deletion option, at least one of: deleting a first set of messages associated with the first session; disassociating an association between the first set of messages and the first session, without deleting the first set of messages.

In some embodiments, the session interface is a first session interface, and the element presenting module 1020 is further configured to: determine a sharing object to be shared in response to receiving a selection of the sharing option; and share the first set of messages associated with the first session into a second session interface associated with the sharing object.

In some embodiments, the first set of messages is presented as an aggregation message in the second session interface.

In some embodiments, the interface presenting module 1010 is further configured to: provide a creation entry for creating a new session in the session interface; and create a third session associated with the target object based on a predetermined operation on the creation entry.

In some embodiments, the interface presenting module 1010 is further configured to associate a set of target messages associated with the target object to the third session.

In some embodiments, the set of target messages comprises at least one of: a second set of messages selected by the user; and a third set of messages from a set of historical messages associated with the target object determined based on a predetermined operation on the third session by the user.

In some embodiments, the interface presenting module 1010 is further configured to: determine a session identifier of the third session, where the session identifier of the third session comprises: a session identifier input by the user; or a session identifier determined based on a set of messages associated with the third session, where the set of messages is determined based on a user input.

In some embodiments, the interface presenting module 1010 is further configured to: receive a trigger operation indicating a target direction in the session interface; and switch the session interface to present a fourth session of the set of sessions, where the fourth session is determined based on the target direction.

In some embodiments, the interaction operation comprises: a sliding operation corresponding to the target direction in a predetermined area of the session interface.

In some embodiments, the interface presenting module 1010 is further configured to present, in the session interface, the session identifier of the target session currently displayed in the session interface.

In some embodiments, the interface presenting module 1010 is further configured to, present, in response to receiving a new message associated with a fifth session of the set of sessions, a first message indicator in association with the session management entry, where the fifth session is different from the target session.

In some embodiments, the interface presenting module 1010 is further configured to present, in response to a selection of the session management entry in the session interface, a second message indicator for indicating the new message, in association with a third session element corresponding to the fifth session.

In some embodiments, the first message indicator indicates a number of all unread messages associated with the set of sessions, and/or the second message indicator indicates a number of unread messages associated with the fifth session.

In some embodiments, the interface presenting module 1010 is further configured to: present a message interface associated with the current user, the message interface presenting a set of object message items associated with a set of objects, the set of object message items comprising a target object message item corresponding to the target object; and present, in response to a predetermined operation on the target object message item, a set of session message items corresponding to the set of sessions of the target object in the message interface.

In some embodiments, the interface presenting module 1010 is further configured to present, in response to receiving a new message associated with the target session a third message indicator for indicating the new message, in association with a target session message item corresponding to the target session.

In some embodiments, the interface presenting module 1010 is further configured to: receive a request to create a new session or a request to delete an existing session; and perform creation of the new session or deletion of the existing session based on the confirmation of the request by the at least one user corresponding to the target object.

In some embodiments, the interface presenting module 1010 is further configured to send, in response to a new session associated with the target object being created or an existing session being deleted, a reminder regarding a creation of the new session or a deletion of the existing session to at least one user corresponding to the target object.

In some embodiments, the apparatus 1000 further comprises a sharing module configured to: receive a sharing request for sharing target content to the target object; and send the target content to a sixth session in the set of sessions.

In some embodiments, sending the target content to the sixth session in the set of sessions comprises: presenting a set of sharing options corresponding to the set of sessions based on the sharing request; and sending, in response to a selection of the target sharing option corresponding to the sixth session in the set of sharing options, the target content to the sixth session in the set of sessions.

In some embodiments, the sharing module is further configured to, display, in response to a session recommendation operation triggered by the user, a sharing option corresponding to the sixth session, where the sixth session is determined from the set of sessions based on content description information of the target content.

In some embodiments, the set of sessions comprises at least one of: a global session associated with a a full set of messages with the target object; and a topic session associated with a subset of the messages set with the target object.

In some embodiments, the set of sessions comprises a plurality of sessions, where sesson participants of the plurality of sessions comprise the current user and the target object.

In some embodiments, the apparatus 1000 further comprises a message moving module configured to move, in response to a movement operation triggered by the user on a target message associated with the target session, the target message to another session of the set of sessions different from the target session.

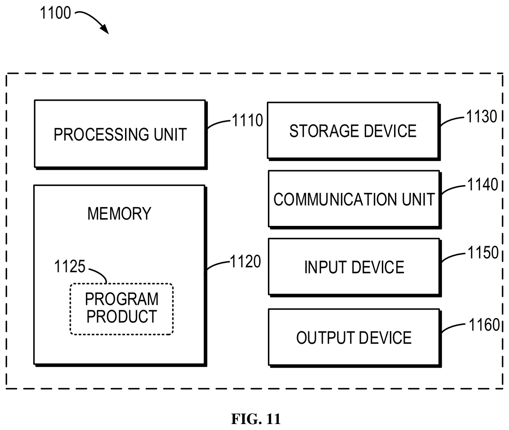

FIG. 11 illustrates a block diagram of an electronic device 1100 in which one or more embodiments of the present disclosure may be implemented. It should be understood that the electronic device 1100 illustrated in FIG. 11 is merely an example and should not constitute any limitation on the functionality and scope of the embodiments described herein. The electronic device 1100 shown in FIG. 11 may be configured to implement the electronic device 110 in FIG. 1.

As shown in FIG. 11, the electronic device 1100 is in the form of a general-purpose electronic device. Components of the electronic device 1100 may include, but are not limited to, one or more processors or processing units 1110, a memory 1120, a storage device 1130, one or more communication units 1140, one or more input devices 1150, and one or more output devices 1160. The processing unit 1110 may be an actual or virtual processor and configured to execute various processes according to programs stored in the memory 1120. In multiprocessor systems, multiple processing units execute computer-executable instructions in parallel to improve parallel processing capabilities of the electronic device 1100.

The electronic device 1100 typically comprises a plurality of computer storage media. Such media may be any available media accessible to the electronic device 1100, including, but not limited to, volatile and non-volatile media, removable and non-removable media. The memory 1120 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 1130 may be a removable or non-removable medium and may include a machine-readable medium, such as a flash drive, magnetic disk, or any other medium, which may be capable of storing information and/or data (e.g., training data for training) and may be accessed within electronic device 1100.

The electronic device 1100 may further include additional removable/non-removable, volatile/non-volatile storage media. Although not shown in FIG. 11, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1120 may include a computer program product 1125 having one or more program modules configured to perform various methods or actions of various embodiments of the present disclosure.

The communication unit 1140 is configured to communicate with another electronic device through a communication medium. Additionally, the functionality of components of the electronic device 1100 may be implemented in a single computing cluster or multiple computing machines capable of communicating over a communication connection. Thus, the electronic device 1100 may operate in a networked environment using logical connections with one or more other servers, network personal computers (PCs), or another network node.

The input device 1150 may be one or more input devices, such as a mouse, a keyboard, a trackball, or the like. The output device 1160 may be one or more output devices, such as a display, a speaker, a printer, or the like. The electronic device 1100 may also communicate with one or more external devices (not shown) through the communication unit 1140 as needed, external devices such as storage devices, display devices, etc. , communicate with one or more devices that enable a user to interact with the electronic device 1100, or communicate with any device (e.g., a network card, a modem, etc. ) that enables the electronic device 1100 to communicate with one or more other electronic devices. Such communication may be performed via an input/output (I/O) interface (not shown).

According to example implementations of the present disclosure, a computer-readable storage medium having computer-executable instructions stored thereon is provided, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions comprises an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that comprises one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are example, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for interface interaction comprising:
presenting a session interface associated with a target object;
presenting, in response to a selection of a session management entry in the session interface, a set of session elements for indicating a set of sessions associated with the target object; and
presenting, in response to a selection of a target session element of the set of session elements corresponding to a target session, the target session in the session interface.

2. The method of claim 1, wherein the session management entry indicates a number of the set of sessions.

3. The method of claim 1, wherein the session interface comprises a switching entry, and the method further comprises:
switching, in response to a predetermined operation on the switching entry in the session interface, an area corresponding to an input component in the session interface and to present the session management entry, the input component being configured to receive a message input to the session interface by a current user.

4. The method of claim 1, wherein the set of session elements is configured to indicate session description information of the set of sessions, wherein the session description information comprises at least one of: a session identifier of a session; or a message preview of a session, wherein the message preview presents at least one message associated with the session.

5. The method of claim 1, wherein presenting the set of session elements comprises:
presenting a first session element corresponding to a first session in the set of sessions in a first style, wherein the first session is a current session displayed in the session interface; and
presenting a second session element corresponding to a second session in the set of sessions in a second style, the first style being different from the second style.

6. The method of claim 1, further comprising:
providing, in response to a predetermined operation on a respective session element in the set of session elements, at least one session operation option for operating the session to be operated corresponding to the respective session element.

7. The method of claim 6, wherein the at least one session operation option comprises at least one of:
an editing option, configured to edit a session identifier of the session to be operated;
a deletion option, configured to delete the session to be operated;
a sharing option, configured to share the session to be operated.

8. The method of claim 7, further comprising performing, in response to receiving the selection for the deletion option, at least one of:
deleting a first set of messages associated with the session to be operated;
disassociating an association between the first set of messages and the session to be operated, without deleting the first set of messages.

9. The method of claim 7, wherein the session interface is a first session interface, and the method further comprises:
determining a sharing object to be shared in response to receiving a selection of the sharing option; and
sharing the first set of messages associated with the first session into a second session interface associated with the sharing object.

10. The method of claim 9, wherein the first set of messages is presented as an aggregation message in the second session interface.

11. The method of claim 1, further comprising:
providing a creation entry for creating a new session associated with the target object in the session interface; and
creating a third session associated with the target object based on a predetermined operation on the creation entry.

12. The method of claim 11, further comprising:
associating a set of target messages associated with the target object to the third session.

13. The method of claim 12, wherein the set of target messages comprises at least one of:
a second set of messages selected by the user; and
a third set of messages from a set of historical messages associated with the target object determined based on a predeteremined operation on the third session by the user.

14. The method of claim 11, further comprising:
determining a session identifier of the third session, wherein the session identifier of the third session comprises at least one of: a session identifier input by the user; or a session identifier determined based on a set of messages associated with the third session, wherein the set of messages is determined based on a user input.

15. The method of claim 1, further comprising:
receiving a trigger operation indicating a target direction in the session interface; and
switching the session interface to present a fourth session of the set of sessions, wherein the fourth session is determined based on the target direction.

16. The method of claim 15, wherein the trigger operation comprises: a sliding operation corresponding to the target direction in a predetermined area of the session interface.

17. The method of claim 1, further comprising:
presenting, in the session interface, the session identifier of the target session currently displayed in the session interface.

18. The method of claim 1, further comprising:
presenting, in response to receiving a new message associated with a fifth session of the set of sessions, a first message indicator in association with the session management entry, wherein the fifth session is different from the target session.

19. The method of claim 18, further comprising:
presenting, in response to a selection of the session management entry in the session interface, a second message indicator for indicating the new message, in association with a third session element corresponding to the fifth session.

20. The method of claim 18 or 19, wherein the first message indicator indicates a number of all unread messages associated with the set of sessions, and/or
the second message indicator indicates a number of unread messages associated with the fifth session.

21. The method of claim 1, further comprising:
presenting a message interface associated with the current user, the message interface presenting a set of object message items associated with a set of objects, the set of object message items comprising a target object message item corresponding to the target object; and
presenting, in response to a predetermined operation on the target object message item, a set of session message items corresponding to the set of sessions of the target object in the message interface.

22. The method of claim 21, further comprising:
presenting, in response to receiving a new message associated with the target session, a third message indicator for indicating the new message, in association with a target session message item corresponding to the target session.

23. The method of claim 1, further comprising:
receiving a request to create a new session or a request to delete an existing session; and
performing creation of the new session or deletion of the existing session based on confirmation of the request by at least one user corresponding to the target object.

24. The method of claim 1, further comprising:
sending, in response to a new session associated with the target object being created or an existing session being deleted, a reminder regarding a creation of the new session or a deletion of the existing session to at least one user corresponding to the target object.

25. The method of claim 1, further comprising:
receiving a sharing request for sharing target content to the target object; and
sending the target content to a sixth session in the set of sessions.

26. The method of claim 25, wherein sending the target content to the sixth session in the set of sessions comprises:
presenting a set of sharing options corresponding to the set of sessions based on the sharing request; and
sending, in response to a selection of a target sharing option corresponding to the sixth session in the set of sharing options, the target content to the sixth session in the set of sessions.

27. The method of claim 25, further comprising:
displaying, in response to a session recommendation operation triggered by the user, a sharing option corresponding to the sixth session, wherein the sixth session is determined from the set of sessions based on content description information of the target content.

28. The method of claim 1, wherein the set of sessions comprises at least one of:
a global session associated with a full set of a message set associated with the target object; or
a topic session associated with a subset of the message set with the target object.

29. The method of claim 1, wherein the set of sessions comprises a plurality of sessions, wherein sesson participants of the plurality of sessions comprise the current user and the target object.

30. The method of claim 1, further comprising:
moving, in response to a movement operation triggered by the user on a target message associated with the target session, the target message to another session of the set of sessions different from the target session.

31. An apparatus for interface interaction comprising:
an interface presenting module configured to present a session interface associated with a target object;
an element presenting module configured to present, in response to a selection of a session management entry in the session interface, a set of session elements for indicating a set of sessions associated with the target object; and
a session presenting module configured to present, in response to a selection of a target session element of the set of session elements corresponding to a target session, the target session in the session interface.

32. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1-30.

33. A computer-readable storage medium having stored thereon a computer program executable by a processor to implement the method of any of claims 1-30.
